# EUROPÄISCHE PATENTSCHRIFT

(11) **EP 3 732 108 B1**
(45) Veröffentlichungstag und Bekanntmachung des Hinweises auf die Patenterteilung: **05.04.2023**
(21) Anmeldenummer: 18779299.9
(22) Anmeldetag: 20.09.2018
(51) Int. Cl.: B65B 31/02, B65B 43/42, B65B 43/52, B65B 55/02, B65G 49/08, B65G 54/02

(54) **VERPACKUNGSEINRICHTUNG SOWIE EIN VERFAHREN ZUM BETREIBEN EINER VERPACKUNGSEINRICHTUNG**
PACKAGING DEVICE AND METHOD FOR OPERATING THE PACKAGING DEVICE
DISPOSITIF D'EMBALLAGE ET PROCÉDÉ POUR FAIRE FONCTIONNER CE DISPOSITIF D'EMBALLAGE

(30) Priorität: 29.12.2017 DE 102017131435
(43) Veröffentlichungstag der Anmeldung: 04.11.2020
(73) Patentinhaber: SIG Combibloc Services AG, 8212 Neuhausen am Rheinfall (CH)
(72) Erfinder: ZAGAR, Franco, 47929 Grefrath (DE); KLAUS, Markus, 52249 Eschweiler (DE); SCHOPEN, Marcel, 51381 Leverkusen (DE); LÜNNEMANN, Bernd, 40489 Düsseldorf (DE); NABER, Klaus, 47906 Kempen (DE); HEUSER, Richard, 52134 Herzogenrath (DE)
(74) Vertreter: Cohausz & Florack
(86) Internationale Anmeldenummer: PCT/EP2018/075406
(87) Internationale Veröffentlichungsnummer: WO 2019/129395

(56) Entgegenhaltungen:
- EP-A1- 2 420 450
- EP-A1- 2 743 192
- DE-A1-102012 112 792
- DE-A1-102014 102 630

## Beschreibung

Der Gegenstand betrifft eine Verpackungseinrichtung sowie ein Verfahren zum Betreiben einer Verpackungseinrichtung.

Verpackungseinrichtungen im Sinne des Gegenstandes können jegliche Einrichtungen sein, die zum Verpacken eines Guts in einer Verpackung geeignet sind. Insbesondere können dies Verpackungseinrichtungen für die Lebensmittelindustrie sein, bei denen in aufgefaltete Packungen oder Schläuche flüssige, pastöse oder schüttfähige Güter eingefüllt werden. Bei diesen Vorgängen wird die Packung entlang verschiedener Arbeitsstationen in einem Produktivbereich bewegt. Für die Bewegung wird die Packung auf einem Transportmittel transportiert. Herkömmlicherweise werden als Transportmittel Kettenantriebe oder Bandantriebe eingesetzt. Diese zeichnen sich durch eine besondere Robustheit und geringe Fehleranfälligkeit aus. Eine Verpackungseinrichtung der genannten Art ist z.B. aus EP 2743192 bekannt.

Problematisch bei diesen Antrieben ist jedoch, dass diese anfällig gegenüber Verschmutzung sind, was insbesondere in der Lebensmittelindustrie relevant ist.

Um Verunreinigungen des abzufüllenden Produkts zu vermeiden, sind höchste Hygienestandards einzuhalten. Um diese insbesondere bei der Abfüllung wenigstens eine flüssige Komponente enthaltende Lebensmittel einzuhalten, ist es erwünscht, möglichst wenige Teile in eine sterile Abfülleinrichtung (Aseptic-Zone) einer Füllmaschine hinein und aus ihr heraus zu bewegen und anschließend zu reinigen.

Auf der anderen Seite darf der Aufwand für die Gewährleistung einer sterilen Abfüllung nicht zu groß werden. Insbesondere der Einsatz von verhältnismäßig Aus diesem Grunde lag dem Gegenstand die Aufgabe zugrunde, eine Verpackungseinrichtung zur Verfügung zu stellen, bei welcher eine Entkopplung der hygienisch relevanten Bauteile von zumindest Teilen des Transportsystems zu geringen Kosten möglich ist.

Diese Aufgabe wird durch eine Verpackungseinrichtung nach Anspruch 1 sowie ein Verfahren nach Anspruch 15 gelöst.

Demgemäß verfügt die Verpackungseinrichtung über zumindest eine Transportschiene. Auf der Transportschiene sind Transportschlitten geführt. Transportschiene und Transportschlitten wirken elektromotorisch miteinander. Die Transportschiene gibt die Transporttrajektorie der Transportschlitten vor. Bevorzugt ist jeder einzelne Transportschlitten auf der Transportschiene unabhängig und individuell ansteuerbar. Durch eine elektromotorische Wirkverbindung zwischen der Transportschiene und den Transportschlitten kann jeder einzelne Transportschlitten individuell angesteuert werden und mit einer einstellbaren Geschwindigkeit, mit einem einstellbaren Beschleunigungsprofil, einem einstellbaren Hub und/oder an einen einstellbaren Ort der Transportschiene bewegt werden. Start und Stopp Zeiten für die Bewegung der einzelnen Transportschlitten sind ebenfalls individuell einstellbar.

Neben der Transportschiene ist ein hiervon verschiedenes Transportmittel vorgesehen. Das Transportmittel ist zum Transport der Transportschlitten eingerichtet. Das Transportmittel ist so angeordnet, dass es die Transportschlitten in einem von der Transportschiene verschiedenen räumlichen Bereich transportiert.

Hierdurch ist es möglich, in einem Produktivbereich eine Taktung der Bewegung der Transportschlitten vorzusehen, welche von der Bewegung der Transportschlitten außerhalb des Produktivbereichs verschieden sein kann. An den Transportmitteln können die Transportschlitten einheitlich entlang des gesamten Transportmittels bewegt werden, wohingegen im Produktivbereich durch die Transportschiene eine können die Transportschlitten einheitlich entlang des gesamten Transportmittels bewegt werden, wohingegen im Produktivbereich durch die Transportschiene eine individuelle Bewegung der Transportschlitten entlang verschiedener Arbeitsstationen möglich ist.

Auch wird bevorzugt, dass Transportschienenschenkel und Transportmittelschenkel jeweils eine Führungsfläche für den Transportschlitten ausbilden. Diese beiden Führungsflächen sind im Wesentlichen fluchtend zueinander in einer Ebene gebildet.

Gemäß einem Ausführungsbeispiel wird vorgeschlagen, dass die Transportvorrichtung zumindest zwei einander gegenüberliegende Schenkel aufweist. Die Schenkel sind bevorzugt vertikal zueinander versetzt. Über jeweils vertikale Schenkel können diese miteinander verbunden sein. Das heißt, dass sich die Transportvorrichtung in einer vertikalen Ebene bevorzugt erstreckt.

Auch ist erkannt worden, dass der Einsatz der Transportschiene insbesondere in einem Produktivbereich, beispielsweise einer sterilen Abfülleinrichtung zum Einsatz kommt. Durch die magnetische Kopplung ist es möglich, lediglich den Transportschlitten durch die Aseptikzone zu führen und die Transportschiene außerhalb der Aseptikzone anzuordnen. Insbesondere kann eine Wand eines Gehäuses der Aseptikzone zwischen der Transportschiene und dem Transportschlitten liegen. Die Wand bildet eine hygienische Barriere. Außerdem ist die Transportschiene mit ihrer Elektronik und gegebenenfalls Nuten, Bohrungen und Löchern außerhalb der Aseptikzone geführt und kann damit einerseits durch die in der Aseptikzone vorherrschenden Umweltbedingungen nicht beschädigt werden und andererseits nicht verschmutzen und ein Keimreservoir bilden.

Die Wand ist bevorzugt aus einem paramagnetischen oder einem nicht ferromagnetischen Material gebildet. Die Wand ist bevorzugt aus Glas, Plexiglas, Kunststoff oder dergleichen gebildet. Bevorzugt ist die Wand aus nichtferromagnetischem Edelstahl gefertigt. Auch ist der Einsatz hitzebeständiger Kunststoffe wie PEEK möglich. Auch kann eloxiertes Aluminium zum Einsatz kommen. Ausreichende mechanische und chemische Eigenschaften und dazu den Vorteil der Durchsichtigkeit können auch durch Acrylglas erreicht werden. Für Wände unterhalb der Packungen kann auch bruchsicheres Echtglas zum Einsatz kommen.

Der Spalt ist bevorzugt wenige Millimeter breit, so dass einerseits die Wandstärke ausreichend groß sein kann, um der mechanischen Belastung stand zu halten, und andererseits die Magnetkraft ausreichend ist, den Transportschlitten durch die Transportschiene in Transportrichtung mitzunehmen.

Eine elektromotorische Transportschiene ist jedoch verhältnismäßig teuer. Der mit der Transportschiene und der damit einhergehenden Entkopplung der Aseptikzone von der Schiene ist daher teuer erkauft. Man versucht jedoch, die gesamte Verpackungseinrichtung zu verhältnismäßig guten Kosten zu realisieren. Bisherige Transportmittel, wie beispielsweise Transportbänder, Transportketten oder dergleichen ermöglichen ebenfalls den Transport von Transportschlitten, bei gleichzeitig erheblich geringeren Kosten.

Aus diesem Grunde wird vorgeschlagen, dass ein Transportschienenschenkel der Transportschiene den Transportschlitten wenigstens entlang eines Produktivbereichs der Verpackungseinrichtung bewegt. Darüber hinaus bewegt ein Transportmittelschenkel der Transportmittel den Transportschlitten wenigstens entlang eines von dem Produktivbereich verschiedenen Bereichs der Verpackungseinrichtung. D.h., dass gegenständlich eine Trennung der Mittel zum Transport des Transportschlittens vorgenommen wird, derart, dass die Transportschiene im Produktivbereich für den Transport des Transportschlittens verantwortlich ist, wohingegen herkömmliche Transportmittel für den Transport des Transportschlittens außerhalb des Produktivbereichs verantwortlich sind.

Der Übergang des Transportschlittens von der Transportschiene auf die Transportmittel oder von dem Transportmittel auf die Transportschiene ist jedoch mechanisch herausfordernd. Um diesen Übergang so einfach wie möglich zu gestalten, wird vorgeschlagen, dass die Längsachsen des Transportschienenschenkels und des Transportmittelschenkels im Wesentlichen kollinear zueinander verlaufen. D.h., dass die Trajektorie des Transportschlittens entlang des Transportschienenschenkels kollinear zu der Trajektorie des Transportschlittens entlang des Transportmittelschenkels ist. Transportschienenschenkel und Transportmittelschenkel führen die Transportschlitten bevorzugt in einer gemeinsamen Ebene. Dies erleichtert den Übergang des Transportschlittens von dem Transportmittel auf die Transportschiene und umgekehrt.

Insbesondere im Bereich einer Einschleusung kann ein Transportmittel enden und eine Übergabe an die Transportschiene erfolgen. An einer Ausschleusung kann der Transportschlitten von der Transportschiene auf ein weiteres Transportmittel übergeben werden. Das bedeutet, dass gegenständlich bevorzugt drei eigenständige Transportarten vorgesehen sind. Dies sind vor und nach der Einschleusung des Produktivbereichs Transportmittel, die insbesondere auch gleich sein können und im Produktivbereich die Transportschiene.

Unmittelbar nach dem Übergang des Transportschlittens auf die Transportschiene an der Einschleusung oder bereits während des Übergangs kann eine räumliche Trennung zwischen Transportschlitten und Transportschiene erfolgen. Diese räumliche Trennung kann durch eine Wand des Gehäuses des Produktivbereichs, insbesondere der Aseptikeinrichtung gebildet sein. Insbesondere kann der Transportschlitten an der Einschleusung von dem Transportmittel auf die Transportschiene übergehen, ohne dass der Transportschlitten in einem unmittelbaren Kontakt mit der Transportschiene gelangt. In dem Produktivbereich wird durch eine magnetische Kopplung mit der Transportschiene der Transportschlitten bewegt. An der Ausschleusung kann der Transportschlitten unmittelbar auf die Transportmittel übergehen, ohne dass er in unmittelbaren Kontakt mit der Transportschiene gelangt.

Wie bereits ausgeführt, gibt es verschiedenartige Transportmittel. Bevorzugt werden Kettenantriebe, Zahnriemenantriebe oder Bandantriebe als Transportmittel eingesetzt. Durch die Transportmittel lässt sich eine Mehrzahl an Transportschlitten in einem Gleichtakt bewegen. Dahingegen ermöglicht die Transportschiene eine Mehrzahl an Transportschlitten mit unterschiedlichen Geschwindigkeiten und Taktungen zu bewegen. Dies ist insbesondere in einem Abfüllbereich relevant, um beispielsweise unterschiedliche Standzeiten an unterschiedlichen Verarbeitungsstationen zu ermöglichen. Dahingegen ist es Upstream und/oder Downstream des Produktivbereichs durchaus möglich, Packungen oder Verpackungen gleichförmig zu transportieren.

Für die magnetische Kopplung zwischen Transportschiene und Transportschlitten weist der Transportschlitten einen Permanentmagneten auf. Dieser Permanentmagnet wird gegenständlich zusätzlich genutzt, um den Transportschlitten mit dem Transportmittel zu koppeln. Hierzu kann an dem Transportmittel ein bevorzugt ferromagnetischer Aufnehmer vorgesehen sein, der sich mit dem Permanentmagneten des Transportschlittens magnetisch koppeln lässt. Somit kann der Transportschlitten sowohl mit der Transportschiene als auch mit dem Transportmittel über seinen Permanentmagneten magnetisch gekoppelt sein.

Für die Übergabe zwischen Transportmittel und Transportschiene kann der Transportschlitten von dem Transportmittel mechanisch abgehoben werden. Auch ist es möglich, dass ein Endbereich des Transportmittelschenkels mit einem Anfangsbereich des Transportschienenschenkels räumlich überlappt und/oder ein Endbereich des Transportschienenschenkels mit einem Anfangsbereich des Transportmittelschenkels räumlich überlappt. Beispielsweise ist es möglich, dass der Transportmittelschenkel in einen gekrümmten Schenkel des Transportmittels übergeht. Dieser gekrümmte Schenkel kann beispielsweise so angeordnet sein, dass der Verlauf des Transportmittels unter die Transportschiene abtaucht. Somit ist es möglich, den Transportschlitten, welcher zunächst mit dem Transportmittel gekoppelt ist, mittels des Transportmittels in einen Anfangsbereichs der Transportschiene zu transportieren. Durch die fortlaufende Bewegung des Transportmittels wird das Transportmittel von dem Transportschlitten getrennt. Dies erfolgt dadurch, dass der Transportschlitten auf der Transportschiene in dem Anfangsbereich aufliegt und der gekrümmte Schenkel der Transportmittel unter die Transportschiene abtaucht und somit der Transportschlitten von dem Transportmittel gelöst wird. Parallel dazu erfolgt eine magnetische Kopplung zwischen Transportschlitten und Transportschiene, so dass die Transportschiene den weiteren Transport des Transportschlittens entlang der Bewegungsrichtung ermöglicht.

Auch ist es möglich, dass der Transportschienenschenkel in seinem Endbereich in einen gekrümmten Schenkel übergeht. Dieser gekrümmte Schenkel kann unter einen Anfangsbereich eines Transportmittels abtauchen. Dies bedeutet, dass wenn der Transportschlitten entlang der Transportschiene in ein Endbereich bewegt wird, der Transportschlitten in Kontakt mit den Transportmittel gelangt und mit diesem magnetisch gekoppelt wird. Bei einem weiteren Transport des Transportschlittens in Transportrichtung wird die magnetische Kopplung des Transportschlittens von der Transportschiene gelöst, da die Transportschiene nach unten wegtaucht und der Transportschlitten auf dem Transportmittel aufliegt. Somit kann der Transportschlitten dann durch das Transportmittel weiter entlang seiner Bewegungsrichtung bewegt werden.

Auf den Transportmitteln können magnetische Koppelglieder vorgesehen sein. Beispielsweise ein Bandantrieb kann beabstandet voneinander magnetische Koppelglieder aufweisen, die mit dem Permanentmagneten des Transportschlittens zusammenwirken und somit eine magnetische Kopplung zwischen Transportschlitten und Transportmittel ermöglichen.

Bevorzugt erfolgt die Kopplung zwischen Transportmittel und Transportschlitten ausschließlich über die magnetische Kopplung. Das bedeutet, dass neben den magnetischen Koppelgliedern keine weiteren mechanischen Elemente notwendig sind, um den Transportschlitten an dem Transportmittel zu halten. Insbesondere bewirkt die magnetische Kopplung, dass der Transportschlitten in einer Richtung normal zu der Fläche des Transportmittels magnetisch fixiert ist. In Richtungen die parallel zur Fläche des Transportmittels verlaufen, kann eine zusätzliche mechanische Sicherung oder Verrastung bzw. Positionierung erfolgen. Eine Abzugskraft, die senkrecht auf die Fläche des Transportmittels gerichtet ist und auf den Transportschlitten wirkt, muss zumindest größer sein, als die Magnetkraft zwischen dem Transportschlitten und dem Koppelglied. Dies vereinfacht die Konstruktion des Transportmittels und des Transportschlittens erheblich.

Für den Transport von Packungen und Verpackungen, in denen schüttfähiges Gut oder fließfähiges Gut, insbesondere wenigstens eine flüssige Komponente enthaltendens Lebensmittel abgefüllt wird, ist der Transport entlang der Horizontalen insbesondere im Produktivbereich vorteilhaft. Daher wird vorgeschlagen, dass der Transportmittelschenkel und der Transportschienenschenkel im Wesentlichen horizontal verläuft.

Wie angedeutet, kann sowohl Upstream als auch Downstream des Produktivbereichs ein Transportmittel angeordnet sein. Vor der Einschleusung in dem Produktivbereich kann somit ein erstes Transportmittel angeordnet sein und nach einer Ausschleusung aus dem Produktivbereich ein zweites Transportmittel. Somit wird lediglich im Produktivbereich eine aufwendige und teure Anordnung mit Transportschiene benötigt. Der sonstige Transport der Transportschlitten samt Packungen/Verpackungen kann mittels herkömmlicher Transportmittel erfolgen.

Ein Transportschlitten kann mechanisch mit einem Träger gekoppelt sein, der zur Aufnahme von vorzugsweise nach oben hin geöffneten, vorzugsweise am Boden oder Giebel bereits geschlossenen Packungen gebildet ist. Vorzugsweise können auf einem oder durch einen solchen Träger mehrere Packungen nebeneinander, quer zur Bewegungsrichtung der Packungen aufgenommen werden. Hierdurch ist eine parallele Verarbeitung von nebeneinander, quer zur Transportrichtung angeordneten Packungen möglich, so dass der Durchsatz der Verpackungsmaschine entsprechend der Anzahl der nebeneinander angeordneten Packungen erhöht werden kann.

Auch ist es möglich, dass der Träger, lösbar oder fest an dem Transportschlitten angeordnet, Teil des Transportschlittens ist. Insbesondere ist es möglich, dass der Transport mit dem Transportmittel durch eine Kopplung des Trägers mit dem Transportmittel erfolgt und dass der Transport entlang der Transportschiene über den Transportschlitten erfolgt. Dabei ist es beispielsweise möglich, dass der Träger mechanisch und/oder magnetisch gekoppelt an dem Transportmittel geführt ist. Ein Endbereich des Transportmittels kann in einen Anfangsbereich der Transportschiene eingreifen. Die Transportschiene nimmt den Transportschlitten auf. Anschließend kann das Transportmittel in einer gekrümmt verlaufenden Trajektorie unter die Transportschiene abtauchen. Der auf der Transportschiene aufliegende Transportschlitten bewirkt, dass der Träger dem Transportmittel in diesem Verlauf nicht mehr folgen kann. Es erfolgt eine Entkopplung zwischen Träger und Transportmittel und der Transportschlitten verbleibt auf der Transportschiene und wird dort mittels magnetischer Kopplung weiter bewegt. Hierbei ist es anzumerken, dass der Transportschlitten nicht unmittelbar auf der Transportschiene aufliegen muss, sondern auch eine Wand, beispielsweise eines Gehäuses der Aseptikeinheit zwischen Transportschlitten und Transportschiene liegen kann.

In einem Endbereich der Transportschiene kann ein weiteres Transportmittel eingreifen. Dieses Transportmittel ist so angeordnet, dass es mechanisch und/oder magnetisch mit dem Träger gekoppelt wird. Im weiteren Verlauf taucht die Transportschiene in einer gekrümmten Trajektorie unter das Transportmittel. Der Träger liegt auf dem Transportmittel auf, so dass der Transportschlitten nicht mehr der Transportschiene folgen kann und eine magnetische Entkopplung zwischen Transportschlitten und Transportschiene erfolgt. Im weiteren Verlauf wird der Träger samt Transportschlitten durch das Transportmittel weiter bewegt.

Entlang eines Produktivbereichs (auch als Prozessbereich zu bezeichnen) kann eine Mehrzahl an Arbeitsstationen der Verpackungsmaschine angeordnet sein. Mit jedem Takt können die Transportschlitten/Verpackungen jeweils zu einer stromabwärts folgenden, insbesondere zur unmittelbar nächsten oder zur übernächsten Arbeitsstation bewegt werden und dort weiterverarbeitet werden. Nach dem Vorschub und der Verweilzeit kann ein Takt zu Ende sein und es erfolgt der nächste Takt.

Der Produktivbereich, hier insbesondere die sterile Abfülleinheit, auch als Aseptikeinheit bezeichnet, weist insbesondere folgende Arbeitsstationen alternativ oder kumulativ zueinander auf. Zunächst kann eine Sterilisationsstation vorgesehen sein, in der Sterilisationsmittel auf die Mitnehmer und/oder Träger und/oder Packungen aufgebracht wird, insbesondere aufgedampft wird. Eine weitere Arbeitsstation kann ein Einwirken des Sterilisationsmittels beinhalten. Eine weitere Arbeitsstation kann ein Trocknen des Mitnehmers, des Trägers und/oder der Packungen beinhalten. Weitere Arbeitsstationen können Fülleinheiten beinhalten, wobei die Fülleinheiten vorzugsweise in doppelter Ausfertigung nacheinander entlang der Transportrichtung so angeordnet sind, dass zu einem Zeitpunkt bzw. in einem Takt jeweils zumindest zwei Packungen, bei mehrbahniger Anordnung pro Packungsbahn, gefüllt werden können. Die Fülleinrichtungen können unterschiedliche Füllgeschwindigkeiten realisieren und beispielsweise auch unterschiedliche Produktmischungen beinhalten. Auch ist es möglich, dass im Anschluss an die Fülleinrichtung bzw. die Fülleinrichtungen vor dem Versiegeln noch wenigstens eine weitere Bearbeitungsstation vorgesehen ist, in der dem in der Packung befindlichen Produkt beispielsweise noch eine Fein- oder Zusatzdosierung verabreichbar ist oder in der ein gasförmiges Medium, insbesondere Inertgas wie z.B. Stickstoff, in den offenen Packungsraum oberhalb des Produktfüllstandes füllbar ist. Eine weitere Arbeitsstation kann das Aufbringen von, vorzugsweise heißem, Dampf und/oder das Falten eines Packungsgiebels beinhalten. Eine weitere Arbeitsstation kann das Versiegeln des Packungsgiebels, insbesondere mit Ultraschall beinhalten. Hiernach kann die sterile Abfülleinheit beendet sein. Eine weitere Arbeitsstation kann aber auch beispielsweise das Aufbringen von Applikationen, beispielsweise von Ausgießern beinhalten. Die Arbeitsstationen, die nach dem Versiegeln folgen, können auch nach einem Ausschleusebereich der sterilen Abfülleinrichtung angeordnet sein. Diese Beschreibung des Produktivbereichs ist rein beispielhaft.

Der Transportschlitten kann eine untere Oberfläche und eine obere Oberfläche aufweisen, wobei die untere Oberfläche dem Transportmittel und der Transportschiene zugewandt ist und die obere Oberfläche von dem Transportmittel/ der Transportschiene abgewandt ist. Dazu können zumindest vier Seitenflächen vorgesehen sein, wobei die Flächennormalen von zwei seitlichen Seitenflächen senkrecht zur Bewegungsrichtung des Transportschlittens stehen. Zwei weitere Seitenflächen können mit ihrer Flächennormalen parallel zur Bewegungsrichtung des Transportschlittens ausgerichtet sein. Der Träger kann an einer Seitenfläche oder einer oberen Oberfläche es Transportschlittens angeordnet werden. Der Träger kann z.B. magnetisch an dem Transportschlitten befestigt sein. Die magnetische Kopplung kann zwischen dem Träger und der oberen Oberfläche und/oder zwischen dem Träger und einer seitlichen Seitenfläche erfolgen. Die B-Feldlinien können entweder im Wesentlichen parallel zur der Flächennormalen der oberen Oberfläche verlaufen oder im Wesentlichen parallel zur der Flächennormalen der seitlichen Seitenfläche verlaufen. Der Transportschlitten und/oder der Träger kann mit seiner unteren Oberfläche an dem Transportmittel und/oder der Transportschiene angeordnet sein. Am Übergang zwischen Transportschiene auf Transportmittel und/oder umgekehrt kann die magnetische Kopplung zwischen unterer Oberfläche des Transportschlittens/Trägers mit der Transportschiene/dem Transportmittel gelöst werden und auf das jeweils andere Transportmedium übergehen. Am Übergang zwischen Transportschiene auf Transportmittel und/oder umgekehrt kann die Bewegung der Transportschlitten insbesondere linear entlang einer Achse sein. Diese Achse kann dabei insbesondere in einer Ebene der oberen Oberfläche der Transportschiene und/oder eines der Transportmittel sein.

Gemäß einem Ausführungsbeispiel wird vorgeschlagen, dass die Transportschiene in einem Abfüllbereich entlang einer Aseptikeinheit geführt ist. Dabei ist die Transportschiene bevorzugt jedoch gegenüber dem Inneren der Aseptikeinheit durch das Gehäuse der Aseptikeinheit abgegrenzt. Die Aseptikeinheit umschließt vorzugsweise die Transportschlitten. Die Aseptikeinheit dient zur aseptischen Führung der Transportschlitten und Packungen sowie ggf. Trägern im Füllbereich. Durch die Aseptikeinheit werden die Transportschlitten und die Packungen sowie gegebenenfalls die Träger vor dem Befüllen mit dem Produkt sterilisiert. Die Sterilisation wird vorzugsweise mit HzOz durchgeführt. Der Transportkanal der Aseptikeinheit, in dem die Transportschlitten und gegebenenfalls Packungen und Träger geführt werden, sollte möglichst einen kleinen Querschnitt aufweisen und Transportschlitten, Träger und/oder Verpackungen radial umschließen. Die Transportschlitten werden durch die magnetische Kopplung mit der Transportschiene geführt, jedoch liegt die Transportschiene außerhalb der Aseptikeinheit und erfährt somit keine Verunreinigung durch die Aseptikeinheit. Zudem wirken sich die in der Aseptikeinheit im Betrieb vorherrschenden Umweltbedingungen nicht oder nur gedämpft auf die Transportschiene samt deren Elektronik aus. Dies ist von Vorteil, da die Transportschiene ansonsten einem erhöhtem Verschleiß ausgesetzt wäre.

Gemäß einem Ausführungsbeispiel wird vorgeschlagen, dass die Aseptikeinheit die Transportschlitten radial umlaufend umschließt. D.h., dass umlaufend zu der Bewegungsrichtung der Transportschlitten die Aseptikeinheit den Transportschlitten umschließt. Insbesondere hat die Aseptikeinheit ein Gehäuse um den Transportschlitten herum. Entlang der Bewegungsrichtung des Transportschlittens hat die Sterilisationseinheit zumindest eine Eingangsöffnung und eine Ausgangsöffnung, über die die Packungen insbesondere auf Trägern ein- und ausgeschleust werden. Während des Transports durch die Sterilisationseinheit sind Transportschlitten und/oder Träger und Packungen durch das Gehäuse umhaust und eine sterile Befüllung der Packungen kann erfolgen.

In der Aseptikeinheit wird zunächst Sterilisationsmittel, insbesondere HzOz vorzugsweise in dampfförmigen Zustand zugeführt. Dabei kann HzOz Dampf zugeführt werden, um die Sterilisierung thermisch zu unterstützen. Die Zuführung von HzOz Dampf für eine Heißsterilisation, insbesondere für eine Dampfsterilisation, kann insbesondere während oder nach dem Zuführen des Produktes erfolgen, insbesondere an oder nach der Fülleinrichtung.

Außerhalb der Aseptikeinheit kann zudem eine (insbesondere zusätzliche) Sterilisierung der Transportschlitten erfolgen, um den Keimeintrag in die Aseptikeinheit zu verhindern und eine hohe Einwirkzeit an schwer zu sterilisierenden Bereichen zu gewährleisten.

Der Transport der Packungen entlang sowohl der Transportschiene kann mittels Trägern erfolgen. Die Packungen können in, an oder auf den Trägern gehalten sein. Die Träger werden durch den Transportschlitten entlang der Transportschiene bewegt.

Vorzugsweise kann an einem Transportschlitten ein Träger angeordnet sein, auf dem zumindest eine Packung, vorzugsweise jedoch zwei oder mehr als zwei Packungen gleichzeitig getragen werden. Der Träger kann dabei mechanisch so ausgestaltet sein, dass er den Boden oder den Giebel einer Verpackung aufnehmen kann. Der Träger kann mechanisch auch so ausgestaltet sein, dass er eine Verpackung klemmend, vorzugsweise seitlich klemmend aufnehmen kann

Insbesondere, gemäß einer eigenständig erfinderischen Ausgestaltung, die mit allen hier beschriebenen Merkmalen frei kombinierbar ist, kann der Träger von dem Transportschlitten relativ einfach entfernt und durch einen anderen Träger ausgetauscht werden. Somit kann der Transportschlitten für verschiedene Arten von Trägern als Führungsmedium dienen und auf verschiedenen Träger können verschiedene Verpackungstypen mit ggf. verschiedenen Querschnitten oder Formen zum Einsatz kommen. Der Träger ist von den Transportschlitten mechanisch lösbar.

Dabei kann der Träger an dem Transportschlitten verrasten und durch geeignete Maßnahmen gelöst werden. Auch kann der Träger fest an dem Transportschlitten angeordnet sein.

Auch wird vorgeschlagen, dass ein Träger verschiedene Packungen derart aufnehmen kann, dass unabhängig von der Längenausdehnung der Packung bei verschiedenen Packungen jeweils an zumindest einem Ort der Transportschiene eine Oberkante der Packungen auf einem gleichen Niveau, insbesondere einem gleichen Abstand zur Transportschiene hat. Hierbei kann der Träger die Packungen entweder an verschiedenen Positionen in Längsrichtung aufnehmen oder der Träger kann die relative Lage der Packungen zur Schiene, insbesondere quer bzw. rechtwinklig zur Schiene verstellen. Hierdurch kann erreicht werden, dass eine Oberkante einer Packung, unabhängig von der Längsausdehnung einer Packung, an zumindest einer Stelle entlang der Transportschiene einen gleichen Abstand zu der Transportschiene hat. Dies ist insbesondere bei Packungen mit verschiedenen Füllvolumina sinnvoll, da hierdurch stets der gleiche Abstand einer Öffnung zu z.B. einer Fülleinrichtung eingehalten werden kann und die Packungen in einem gleichen Abstand entlang der Fülleinrichtung bewegt werden können und dort befüllt werden können.

Die Träger für die Packungen können an dem Transportschlitten befestigt sein. Insbesondere über Magnetverbindungen oder Clickverbindungen können die Träger an den Transportschlitten angeordnet sein, so dass sie leicht austauschbar sind. Auch ist es möglich, dass zwei Transportschlitten zueinander so beweglich sind, dass sie die Packung greifend aufnehmen. Dabei kann eine nach hinten (zur Bewegungsrichtung) weisende Kante eines ersten Transportschlittens bzw. eines ersten Trägers mit einer nach vorne (zur Bewegungsrichtung) weisenden Kante eines nachfolgenden Transportschlittens bzw. Trägers so interagieren, dass die Packung zwischen der hinteren Kante und der vorderen Kante verklemmt ist. Hierzu können die Transportschlitten so aufeinander zu bewegt werden, dass ein Verklemmen der Packungen zwischen den Transportschlitten bzw. den daran angeordneten Trägern erfolgen kann.

Die Transportschlitten können an der Transportschiene geführt werden. Zwar ist die Bewegung der Transportschlitten entlang der Transportschiene vorzugsweise elektromagnetisch, insbesondere in der Form eines Linearmotors, jedoch kann eine magnetische Führung nicht immer vollständig ausreichen, die Transportschlitten an der Transportschiene zu halten. Daher sind Rollen an dem Transportschlitten vorgesehen, die in entsprechenden Nuten oder Aufnahmen an der Führungsschiene geführt sind.

Die Anzugskraft der Transportschiene/des Transportmittels auf die Transportschlitte ist insbesondere größer als die Schwerkraft der Transportschlitten. Die Rollen der Transportschlitten können in einer Nut oder an einer Nocke der Transportschiene geführt sein.

Wie bereits erläutert, ist an einem Transportschlitten vorzugsweise ein Träger zur Aufnahme von zumindest einer Packung angeordnet. Der Träger ist vorzugsweise derart am Transportschlitten angeordnet, dass er rechtwinklig zur Bewegungsrichtung des Transportschlittens mehrere Aufnahmen nebeneinander aufweist, an denen Packungen angeordnet werden können. Ein Träger kann beispielsweise T-förmig auf einem Transportschlitten aufgesetzt sein. Der Transportschlitten kann vorzugsweise mittig am Träger angeordnet sein. Der Träger kann zur Aufnahme verschiedenförmiger Packungen/Packungsformen gebildet sein. Auf einem Träger können zumindest zwei Packungen, auch mit verschiedenen Querschnitten angeordnet sein.

Auch ist es möglich, dass zumindest zwei parallel verlaufende Transportschienen vorgesehen sind. Zwischen diese Transportschienen kann ein Transportmittel eingangsseitig und/oder ausgangsseitig eingreifen und die Transportschlitten dort übergeben oder übernehmen. Die Transportschienen sind vorzugsweise zueinander deckungsgleich in ihrem Verlauf und nebeneinander mit einem konstanten Abstand zueinander angeordnet. An jeder sind die Transportschlitten gelagert. Jeweils zwei Transportschlitten sind synchronisiert auf den beiden Transportschienen geführt. D.h., dass auf jeder Transportschiene jeweils ein Transportschlitten vorgesehen ist, der mit jeweils einem anderen Transportschlitten der anderen Transportschiene synchronisiert ist. Die Synchronisation bedeutet, dass die Transportschlitten möglichst gleichförmig entlang der jeweiligen Transportschiene bewegt werden. Die Position der Transportschlitten in Bewegungsrichtung ist dabei vorzugsweise synchronisiert, so dass die Transportschlitten zu jeder Zeit möglichst die gleiche Position auf ihrer jeweiligen Transportschiene einnehmen. Zwischen den Transportschlitten kann ein Träger angeordnet sein, auf dem die Packungen angeordnet werden können.

Der Träger kann eingangsseitig der Transportschiene auf dem Transportmittel geführt sein. Kommt der Transportschlitten zur Auflage auf die Transportschiene kann gleichzeitig eine magnetische Kopplung zwischen Transportschiene und Transportschlitten erfolgen. Taucht im weiteren Verlauf in Bewegungsrichtung das Transportmittel quer zur Bewegungsrichtung nach unten ab, wird die Kopplung zwischen Träger und Transportmittel gelöst und die Transportschiene übernimmt den Transport des Transportschlittens.

Der Träger kann ausgangsseitig der Transportschiene auf der Transportschiene durch die Transportschlitten geführt sein. Kommt der Transportschlitten zur Auflage auf einem ausgangsseitig angeordneten Transportmittel kann gleichzeitig eine magnetische Kopplung zwischen Transportmittel und Transportschlitten/Träger erfolgen. Taucht im weiteren Verlauf in Bewegungsrichtung die Transportschiene quer zur Bewegungsrichtung nach unten ab, wird die Kopplung zwischen Transportschlitten und Transportschiene gelöst und das Transportmittel übernimmt den Transport des Transportschlittens mit Träger.

Eine besonders gute Synchronisation der Transportschlitten wird dadurch realisiert, dass ein Transportschlitten an einer ersten der Transportmittel als Master-Schlitten angesteuert ist und ein Transportschlitten an einer zweiten der Transportmittel als Slave-Schlitten abhängig von dem Master-Schlitten geführt ist. Eine Master-Slave-Steuerung ermöglicht es, dass der Slave-Schlitten stets synchron zum Master-Schlitten geführt ist. Hierbei gibt der Master-Schlitten vorzugsweise die Position des Schlittens auf dem Transportmittel vor und der Slave-Schlitten folgt dieser Position unmittelbar und in Echtzeit. Dadurch wird ein synchroner Lauf der jeweils beiden Transportschlitten entlang ihrer jeweiligen Transportmittel ermöglicht. Wählt man einen virtuellen Transportschlitten als Masterschlitten aus, an dem sich die (beiden) Transportschlitten als Slave-Schlitten in gleichwertiger Abhängigkeit orientieren, erhält man eine ganz besonders gute Synchronisation.

Bei der Verpackungseinrichtung werden die Träger durch die Transportschlitten entlang der Trajektorie der Transportschiene zumindest in Abschnitten bewegt.

Insbesondere kann an einer Einschleusung zu dem Produktivbereich, eine Übergabe des Transportschlittens von dem Transportmittel auf die Transportschiene erfolgen. Darüber hinaus kann an einer Ausschleusung des entsprechenden Produktivbereichs eine Übergabe des Transportschlittens von der Transportschiene auf ein Transportmittel erfolgen.

Wie bereits erläutert, wird die Verpackungseinrichtung insbesondere auch in der Lebensmittelindustrie eingesetzt. In der Aseptikeinheit werden Packungen mit dem aufzunehmenden Produkt befüllt. Dabei ist das Produkt vorzugsweise ein Lebensmittel, insbesondere ein Getränk und kann bedarfsweise stückige Anteile aufweisen. Grundsätzlich sind die zu verpackenden Produkte schüttfähig oder rieselfähig, insbesondere fließfähig. Besonders bevorzugt sind entsprechende Packungen zur Aufnahme eines wenigstens eine flüssige Komponente aufweisenden Lebensmittels. Das Abfüllen des Lebensmittels erfolgt vorzugsweise in einer Abfülleinrichtung. Zur Vermeidung von Verschmutzung der Abfülleinrichtung durch die Transportschiene und umgekehrt wird vorgeschlagen, dass nur der Transportschlitten in einer Abfülleinrichtung geführt ist und die Transportschiene außerhalb.

Darüber hinaus wird vorgeschlagen, dass die Transportschiene und die Transportschlitten als Linearmotor gebildet sind.

Gemäß einem Ausführungsbeispiel wird vorgeschlagen, dass die Transportschiene aus einem Stator des Linearmotors gebildet ist und insbesondere eine Mehrzahl entlang der Transportschiene angeordnete Magnetspulen aufweist. Durch eine geeignete Ansteuerung bzw. Erregung der Magnetspulen lässt sich das Magnetfeld entlang der Transportschiene variieren und vorzugsweise in Bewegungsrichtung verschieben. Die Transportschlitten können so dem sich verschiebenden Magnetfeld folgen. Vorzugweise ist die Anzahl der individuell ansteuerbaren Magnetfelder zumindest entsprechend der Anzahl der Transportschlitten auf der Transportschiene. Somit ist jeder einzelne Transportschlitten individuell ansteuerbar.

Die Transportschlitten folgen dem Magnetfeld der Transportschiene insbesondere dann, wenn diese als Permanentmagneten gebildet sind. Der Vorteil der Auslegung der Transportschlitten mit einem Permanentmagneten liegt darin, dass es nicht notwendig ist, die Transportschlitten bzw. darin angeordnete Magnetspulen elektrisch zu erregen, was einen elektrischen Kontakt zwischen den Transportschlitten und einer Kontaktschiene bedingte.

Aufgefaltete Packungsmäntel, insbesondere mit einem verschlossenen Boden oder Giebel, werden an einen jeweiligen Transportschlitten bzw. dessen Träger herangeführt. Die Packungen werden durch den Träger aufgenommen und zu dem Produktivbereich geführt. Der Produktivbereich kann eine Einschleusung in einen Abfüllbereich, insbesondere in eine sterile Abfülleinrichtung aufweisen. Ausgangsseitig der sterilen Abfülleinrichtung erfolgt eine Ausschleusung.

Entlang des Produktivbereichs folgt der Transportschlitten der Transportschiene durch magnetische Kopplung. Dabei ist die Transportschiene außerhalb eines Gehäuses des Produktivbereichs und der Transportschlitten innerhalb des Gehäuses geführt.

An der Ausschleusung werden die gefüllten, vorzugsweise verschlossenen Verpackungen aus der Abfülleinrichtung heraus geführt. Dort ist es möglich, dass der Transportschlitten von der Transportschiene auf die Transportmittel aufgesetzt wird.

Nachfolgend wird der Gegenstand anhand einer Ausführungsbeispiele zeigenden Zeichnung näher erläutert. In der Zeichnung zeigen:
- Fig. 1: eine schematische Schnittansicht eines Transportschlittens mit Transportschiene und Transportmittel;
- Fig. 2: eine Draufsicht auf eine Verpackungseinrichtung mit Transportschiene und Transportmittel;
- Fig. 3: eine Verpackungseinrichtung mit Transportmitteln an Ein- und Ausschleusung sowie einer Transportschiene;
- Fig. 4: eine Ausgestaltung einer Übergabe an Ein- und Ausschleusung;
- Fig. 5: eine Schnittansicht durch eine Abfülleinrichtung;
- Fig. 6: eine Führung eines Transportschlittens auf einem Transportband.

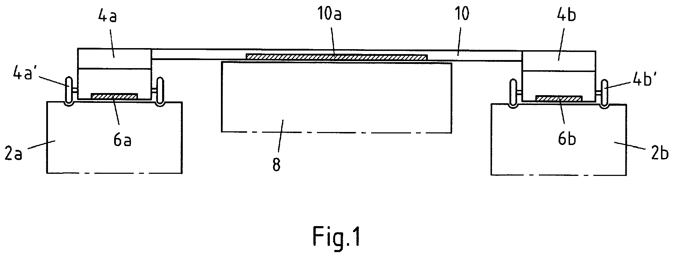

Fig. 1 zeigt zwei Transportschienen 2a, 2b, auf denen beweglich gelagert jeweils ein Transportschlitten 4a, 4b angeordnet ist. Die Transportschienen 2a, 2b und die Transportschlitten 4a, 4b sind permanentmagnetisch über jeweils einen Permanentmagneten 6a, 6b gekoppelt. In den Transportschienen 2a, 2b sind Zeichenebene heraus folgen. Das Prinzip eines linearen Motors mit einem beweglichen an der Transportschiene 2a, 2b angeordneten Transportschlitten 4a, 4b ist an sich bekannt.

Die Transportschlitten 4a, 4b sind beispielsweise über Rollen 4a', 4b` in einer Führung auf der jeweiligen Transportschiene 2a, 3b gelagert. Während des Betriebs bewegen sich die Transportschlitten 4a, 4b bevorzugt in die Zeichenebene hinein oder aus der Zeichenebene hinaus. Die Bewegungsrichtung ist parallel zur Flächennormalen der Zeichenebene. Durch Veränderung des Magnetfelds entlang der Transportschienen 2a, 2b kann der jeweilige Transportschlitten 4a, 4b bewegt werden.

Die Transportschienen 2a, 2b kommen insbesondere in einem Produktivbereich der Verpackungseinrichtung zum Einsatz und bewegen dort die Transportschlitten 4a, 4b. Die Transportschienen 2a, 2b verlaufen parallel zueinander, so dass ein Abstand zwischen dem Transportschlitten 4a, 4b konstant ist.

Vor einer Einschleusung und/oder nach einer Ausschleusung eines Produktivbereichs können die Transportschlitten 4a, 4b jedoch von einem Transportmittel 8, beispielsweise einem Transportband, einem Kettenantrieb, einem Riemenantrieb oder dergleichen bewegt werden.

Das Transportmittel 8 kann beispielsweise in unmittelbarer Verlängerung der Transportschienen 2a, 2b vorgesehen sein. Dann können die Transportschlitten 4a, 4b mit ihren jeweiligen Permanentmagneten 6a, 6b mit dem Transportmittel 8 gekoppelt sein. So ist es möglich, dass entlang der Transportrichtung vor der Transportschiene 2a ein Transportmittel 8 und vor der Transportschiene 2b ein Transportmittel 8 vorgesehen ist. Auch kann in Bewegungsrichtung hinter der Transportschiene 2a ein Transportmittel 8 und hinter der Transportschiene 2b ein Transportmittel 8 vorgesehen sein.

Transportmittel 8 und hinter der Transportschiene 2b ein Transportmittel 8 vorgesehen sein.

In der Fig. 1 ist eine weitere Ausgestaltung gezeigt, in der ein Träger 10 zwischen den Transportschlitten 4a, 4b angeordnet ist. Der Träger 10 kann an Seitenwänden der Transportschlitten 4a, 4b oder an einer oberen Oberfläche der Transportschlitten 4a, 4b angeordnet sein. Der Träger 10 kann dabei lösbar oder fest an dem Transportschlitten 4a, 4b angeordnet sein. Die Kopplung zwischen dem Träger 10 und dem Transportschlitten 4a, 4b kann beispielsweise eine magnetische Kopplung sein. Auch ist eine formschlüssige Kopplung zwischen dem Träger 10 und den Transportschlitten 4a, 4b möglich.

Außerhalb des Produktivbereichs ist es möglich, dass das Transportmittel 8 über einen Permanentmagneten 10a mit dem Träger 10 gekoppelt ist. Auch ist es möglich, dass der Träger 10 ein ferromagnetisches Koppelelement aufweist, welches mit einem Permanentmagneten auf dem Transportmittel 8 gekoppelt ist.

Das Transportmittel 8 hat eine Bewegungsrichtung in die Zeichenebene hinein oder aus der Zeichenebene heraus. Die Bewegungsrichtung ist parallel zur Flächennormale der Zeichenebenen.

Vor einer Einschleusung kann das Transportmittel 8 beispielsweise die Transportschlitten 4a, 4b samt Träger 10 in die Zeichenebene hineinbewegen. An einer Übergabestelle erfolgt eine Übergabe derart, dass die Kopplung zwischen Transportmittel 8 und den Träger 10 gelöst wird und gleichzeitig eine magnetische Kopplung zwischen den Transportschienen 2a, 2b und den jeweiligen Transportschlitten 4a, 4b gebildet wird.

Im weiteren Anschluss transportieren die Transportschienen 2a, 2b die Transportschlitten 4a, 4b samt Träger 10 in die Zeichenebene hinein in Bewegungsrichtung.

An einer Ausschleusung kann dann an eine Übergabestelle wieder eine Übergabe auf ein weiteres Transportmittel 8 erfolgen. An der Übergabestelle kann die magnetische Kopplung zwischen den Transportschlitten 4a, 4b und den Transportschienen 2a 2b gelöst werden und gleichzeitig kann eine Kopplung zwischen dem Transportmittel 8 und dem Träger 10 aufgebaut werden. Im Anschluss daran transportiert das Transportmittel 8 die Transportschlitten 4a, 4b und den Träger 10 weiter entlang einer Bewegungsrichtung in die Zeichenebene hinein.

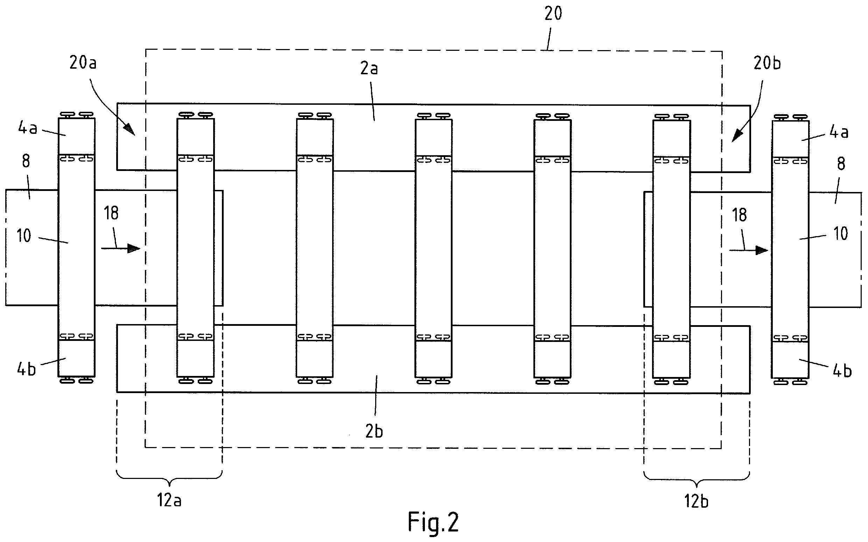

Fig. 2 zeigt beispielhaft eine Übergabe zwischen Transportmittel 8 und Transportschiene 2a, 2b in einer Draufsicht. Zu erkennen ist, dass vor einer Einschleusung 20a in eine Aseptikeinheit 20 die Transportschlitten 4a, 4b samt Träger 10 in einer Bewegungsrichtung 18 durch ein Transportmittel 8 bewegt werden. Im Bereich einer Übergabestelle 12a überlappen sich das Transportmittel 8 und die Transportschienen 2a, 2b in Richtung der Transportrichtung 18.

Im Übergabebereich 12a wird die Kopplung zwischen dem Träger 10 und dem Transportmittel 8 gelöst und es erfolgt eine magnetische Kopplung zwischen den Transportschlitten 4a, 4b und den jeweiligen Transportschienen 2a, 2b.

Im Bereich der Aseptikeinheit 20 werden die Transportschlitten 4a, 4b dann weiter in Bewegungsrichtung 18 bewegt bis zu einer Ausschleusung 20b.

Im Bereich einer Ausschleusung 20b ist erneut eine Übergabestelle 12b vorgesehen.

Auch hier überlappt sich der Transportmittel 8 mit den Transportschienen 2a, 2b in Bewegungsrichtung.

Im Bereich der Übergabe 12b wird die Kopplung zwischen den Transportschlitten 4a, 4b und den jeweiligen Transportschienen 2a, 2b aufgehoben und es erfolgt eine Kopplung zwischen dem Träger 10 und dem Transportmittel 8, welches dann den Transport weiter in Transportrichtung 18 durchführt.

Das oben beschriebene gilt natürlich vollkommen unabhängig von der Aseptikeinheit 20. Auch ist es möglich, nur eine der Übergabestellen 12a, 12b zu realisieren.

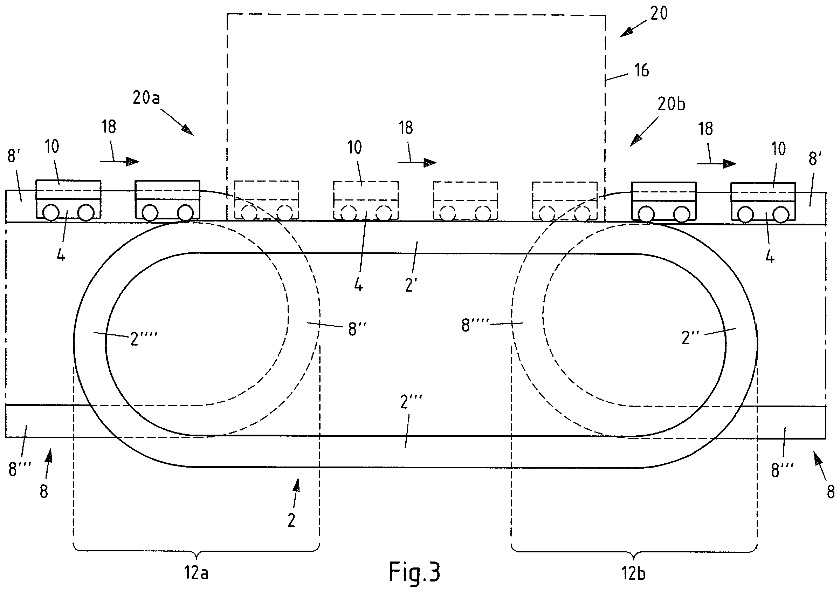

Fig. 3 zeigt ein weiteres Ausführungsbeispiel, bei dem verschiedene Transportmittel 8 mit einer Transportschiene 2 zusammenwirken.

Vor der Einschleusung 20a kann ein Transportmittel 8 z.B. als Transportkette gebildet sein. Auf der Transportkette können Transportschlitten 4 mit Hilfe von magnetischen Haltern oder dergleichen gehalten sein. Die Transportkette 8 hat eine Bewegungsrichtung 18. An den Transportschlitten 4 sind die Träger 10 magnetisch gekoppelt.

An der Einschleusung 20a erfolgt eine Übergabe des Transportschlittens 4 von dem Transportmittel 8 auf die Transportschiene 2. Anschließend werden die Transportschlitten durch die Aseptikeinheit 20 bewegt.

An einer Ausschleusung 20b werden die Transportschlitten von der Transportschiene 2 gelöst und einem Transportmittel 8 übergeben. Dies kann eine Kette oder ein Band sein. Dort können die Transportschlitten in der Form von Haltern gehalten sein.

Das erste Transportmittel 8 hat mehrere Schenkel 8', 8" und 8‴. Auf dem Schenkel 8' werden die Transportschlitten 4 in Transportrichtung 18 bewegt. Der Schenkel 8' kann als Transportmittelschenkel verstanden werden. Dieser Transportmittelschenkel 8 verläuft parallel zu einem Transportschienenschenkel 2'. In der Fig. 3 ist zu erkennen, dass die Transportschiene 2 verschiedene Schenkel 2'-2"" aufweist. Die Bewegung entlang des Produktivbereichs, insbesondere der Aseptikeinheit 20 erfolgt entlang des Transportschienenschenkels 2'. Der Transportschienenschenkel 2' verläuft parallel zum Transportmittelschenkel 8'. Die Bewegungsrichtung 18 entlang des Transportschienenschenkels 2' ist gleichgerichtet zu der Bewegungsrichtung entlang des Transportmittelschenkels 8'.

Auch ausgangsseitig des Produktivbereichs, stromabwärts zur Bewegungsrichtung 18 kann ein Transportmittel 8 mit verschiedenen Schenkeln 8, 8", 8‴ gebildet sein. Insbesondere der Schenkel 8' kann als Transportmittelschenkel verstanden werden. Dieser ist parallel zum Transportschienenschenkel 2' und auf dem Transportmittelschenkel 8' ist die Bewegungsrichtung 18 der Transportschlitten 4 gleichgerichtet zu der Bewegungsrichtung 18 auf dem Transportschienenschenkel 2'.

Die Transportmittel 8 sind insbesondere als geschlossener Ring gebildet, was nicht dargestellt ist, so dass mindestens ein Schenkel nicht dargestellt ist. Die Transportmittelschenkel 8' als auch der Transportschienenschenkel 2' sind insbesondere in einer Ebene, bevorzugt kollinear zueinander. Auch können die Transportmittelschenkel 8' in einer Richtung parallel zur Flächennormalen auf die obere Oberfläche des Transportschlittens 4 oberhalb des Transportschienenschenkels 2' liegen.

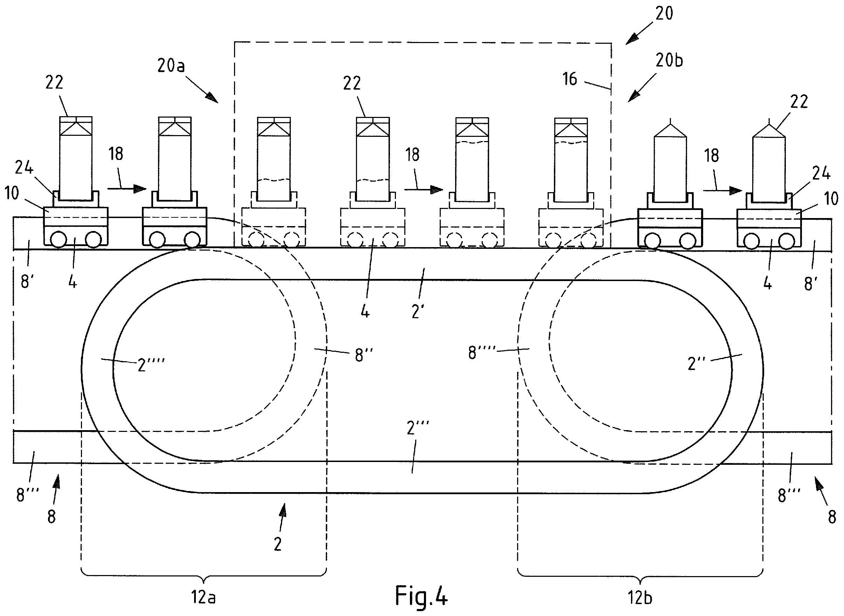

Eine Übergabe zwischen Transportmitteln 8 und Transportschiene 2 ist in der Fig. 4 dargestellt. In der Fig. 4 ist zu erkennen, dass die Transportschlitten 4 samt Träger 10 zunächst auf einem Transportmittel 8 transportiert werden. Auf dem Träger 10 sind aufgefaltete Packungsmäntel 22 angeordnet. Im Bereich einer Übergabe 12a, die beispielsweise im Bereich einer Einschleusung 20a vorgesehen sein kann, überlappen sich Transportmittel 8 und Transportschiene 2.

Zu erkennen ist, dass die Transportschiene 2 von unten mit dem Schenkel 2"" in den Bereich der Transportmittel 8 gelangt und der Transportschienenschenkel 2' dort parallel zu dem Transportmittelschenkel 8' ausgerichtet wird. Im Bereich der Übergabe 12a können die Transportschlitten 4 sowohl mit dem Transportmittel 8 als auch der Transportschiene 2 gekoppelt werden. Weiter in Richtung der Bewegungsrichtung 18 ist zu erkennen, dass die Transportmittel 8 mit dem Schenkel 8" unter die Transportschiene 2, insbesondere den Transportschienenschenkel 2' abtauchen. Bei diesem Abtauchen wird die Kopplung zwischen dem Transportschlitten 4 und dem Transportmittel 8 gelöst und es verbleibt lediglich eine Kopplung zwischen dem Transportschlitten 4 und der Transportschiene 2.

Im Bereich einer Einschleusung 20a werden die Transportschlitten 4 dann in das Innere eines Gehäuses 16 einer Aseptikeinheit 20 eingeschleust und dort entlang der Bewegungsrichtung 18 über den Transportschienenschenkel 2' durch die Aseptikeinheit 20 geführt. An einer Ausschleusung 20b werden die gefüllten Packungen 22 mit den Transportschlitten 4 aus dem Gehäuse 16 ausgeschleust.

Im Bereich einer Übergabe 12b ist zu erkennen, dass ein Transportmittel 8, mit dem Schenkel 8"" von unten in die Transportschiene 2, insbesondere den Transportschienenschenkel 2' eingreift und dann einen Transportmittelschenkel 8' ausbildet, der parallel zum Transportschienenschenkel 2' läuft. In diesem Übergabebereich 12b kann sowohl eine Kopplung zwischen der Transportschiene 2 und den Transportschlitten 4 als auch dem Transportmittel 8 und den Transportschlitten 4 gegeben sein. Im weiteren Verlauf entlang der Transportrichtung 18 ist zu erkennen, dass die Transportschiene 2 mit dem Schenkel 2"nach unten unter den Transportmittelschenkel 8 abtaucht. Hierdurch wird die magnetische Kopplung zwischen dem Transportschlitten 4 und der Transportschiene 2 gelöst. Der Transportschlitten 4 wird dann entlang des Transportmittelschenkels 8' in Bewegungsrichtung 18 samt Träger 10 und Verpackung 22 bewegt.

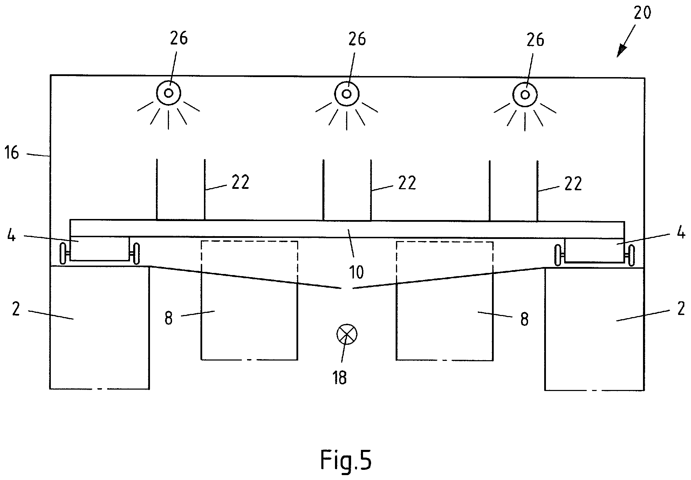

Fig. 5 zeigt eine Schnittansicht durch eine Aseptikeinheit 20. Zu erkennen ist, dass eine Wand 16 der Aseptikeinheit 20 zwischen dem Transportschlitten 4 samt Träger 10 und der Transportschiene 2 gebildet ist. Die Bewegungsrichtung 18 ist in die Zeichenebene hinein. Der Träger 10 ist zwischen den Transportschlitten 4 angeordnet. Auf dem Träger 10 sind die Packungen 22 nebeneinander angeordnet.

In der Aseptikeinheit 20 können beispielsweise Düsen 26 vorgesehen sein, um Sterilisationsmittel, beispielsweise HzOz auf die Packung 22, den Träger 10 und die Transportschlitten 4 zu dampfen oder sprühen, um diese vor einem Befüllen der Packung 22 zu sterilisieren.

Ferner ist zu erkennen, dass in Transportrichtung 18 stromabwärts zwei Transportmittel 8 vorgesehen sein können. Die Transportmittel 8 können zwischen den Transportschienen 2 angeordnet sein. Die Transportmittel 8 transportieren nach einer Übergabe die Transportschlitten 4 samt Träger 10 und Packung 22 weiter in die Bewegungsrichtung 18. An den Transportmitteln 8 kann eine Kopplung zwischen dem Träger 10 und den Transportmitteln 8 oder zwischen den Transportschlitten 4 und dem Transportmittel 8 erfolgen.

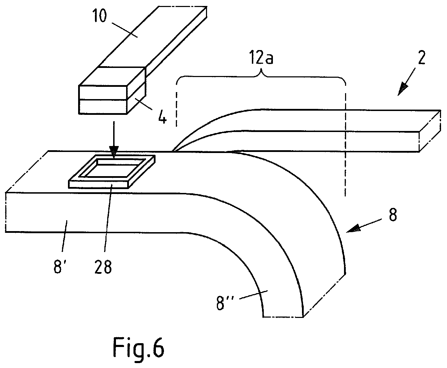

Fig. 6 zeigt beispielhaft, wie ein Transportschlitten 4 samt Träger 10 auf einem Transportband 8 angeordnet sein kann. Auf dem Transportband 8 kann eine Koppeleinheit 28 vorgesehen sein. Die Koppeleinheit 28 kann einen Magneten aufweisen. Auch kann die Koppeleinrichtung 28 als Aufnahme für den Transportschlitten 4 gebildet sein. Hierbei kann ein Rücksprung vorgesehen sein, der im Querschnitt kongruent zu dem Außenumfang des Transportschlittens 4 ist. Im Bereich einer Übergabe 12a kann das Transportband 8 mit seinem Transportmittelschenkel 8' nach unten abtauchen, so dass ein neuer Schenkel 8" gebildet ist. In diesem Bereich 12a erfolgt die Übergabe des Transportschlittens 4 samt Träger 10 auf die Transportschiene (nicht dargestellt).

Mit Hilfe des dargestellten, hybriden Layouts lässt sich eine Verpackungseinrichtung einerseits kostengünstig und andererseits den höchsten Sterilisationsanforderungen genügend herstellen.

### Bezugszeichenlist

- 2, 2a, 2b: Transportschiene
- 2': Transportschienenschenkel
- 2",2"',2"": Schenkel
- 4, 4a, 4b: Transportschlitten
- 4a', 4b': Rollen
- 6, 6a, 6b: Permanentmagnet
- 8: Transportmittel
- 8': Transportmittelschenkel
- 8",8‴,8"": Schenkel
- 10: Träger
- 10a: Permanentmagnet
- 12a, b: Übergabebereich
- 16: Gehäuse
- 20: Aseptikeinheit
- 20a: Einschleusung
- 20b: Ausschleusung
- 22: Packung
- 28: Koppeleinheit

## Patentansprüche

1. Verpackungseinrichtung, insbesondere Fülleinrichtung, mit
- zumindest einer Transportschiene (2, 2a, 2b),
- zumindest einem von der Transportschiene (2, 2a, 2b) verschiedenen Transportmittel (8),
- zumindest einem an der Transportschiene (2, 2a, 2b) angeordneten mit der Transportschiene (2, 2a, 2b) elektromotorisch gekoppelten Transportschlitten, wobei
- ein Transportschienenschenkel (2') der Transportschiene den Transportschlitten wenigstens entlang eines Produktivbereichs der Verpackungseinrichtung bewegt,
- ein Transportmittelschenkel (8') der Transportmittel (8) den Transportschlitten wenigsten entlang eines von dem Produktivbereich verschiedenen Bereichs der Verpackungseinrichtung bewegt, wobei
- die Längsachsen des Transportschienenschenkels (2') und des Transportmittelschenkels (8`) im Wesentlichen parallel zueinander verlaufen und die Transportschlitten entlang des Transportschienenschenkels (2') und des Transportmittelschenkels (8`) eine gleiche Bewegungsrichtung haben,
**dadurch gekennzeichnet,**
- **dass** der Transportschlitten zumindest einen Permanentmagneten (6, 6a, 6b) aufweist, wobei der zumindest eine Permanentmagnet (6, 6a, 6b) sowohl mit der Transportschiene (2, 2a, 2b) koppelbar ist als auch mit dem Transportmittel (8).

2. Verpackungseinrichtung nach Anspruch 1,
**dadurch gekennzeichnet,**
- **dass** die Transportmittel (8) ein Kettenantrieb, Zahnriemenantrieb oder ein Bandantrieb aufweisen.

3. Verpackungseinrichtung nach einem der vorangehenden Ansprüche,
**dadurch gekennzeichnet,**
- **dass** die Transportmittel (8) magnetische Koppelglieder aufweisen, die mit den Transportschlitten magnetisch koppelbar sind.

4. Verpackungseinrichtung nach einem der vorangehenden Ansprüche,
**dadurch gekennzeichnet,**
- **dass** die Transportschlitten durch magnetische Kopplung an den Transportmittel (8) gehalten sind.

5. Verpackungseinrichtung nach einem der vorangehenden Ansprüche,
**dadurch gekennzeichnet,**
- **dass** die Transportmittel (8) Aufnahmen aufweisen, welche zur Aufnahme der Transportschlitten gebildet sind, insbesondere dass die Aufnahmen als Rücksprung im Bereich der magnetischen Koppelglieder angeordnet sind.

6. Verpackungseinrichtung nach einem der vorangehenden Ansprüche,
**dadurch gekennzeichnet,**
- **dass** der Transportmittelschenkel (8') und der Transportschienenschenkel (2') im Wesentlichen horizontal verlaufen.

7. Verpackungseinrichtung nach einem der vorangehenden Ansprüche,
**dadurch gekennzeichnet,**
- **dass** vor einer Einschleusung (20a) in einen Produktivbereich ein erstes der Transportmittel (8) angeordnet ist, dass in dem Produktivbereich die Transportschiene (2, 2a, 2b) angeordnet ist und dass nach einer Ausschleusung aus dem Produktivbereich ein zweites der Transportmittel (8) angeordnet ist.

8. Verpackungseinrichtung nach einem der vorangehenden Ansprüche,
**dadurch gekennzeichnet,**
- **dass** an dem Transportschlitten ein Träger (10) für zumindest eine Verpackung (22) angeordnet ist, insbesondere
- **dass** der Träger (10) lösbar an dem Transportschlitten angeordnet ist.

9. Verpackungseinrichtung nach einem der vorangehenden Ansprüche,
**dadurch gekennzeichnet,**
- **dass** die Transportschiene (2, 2a, 2b) und die Transportschlitten als Linearmotor gebildet sind, und/oder
- **dass** die Transportschiene (2, 2a, 2b) aus einem Stator des Linearmotors gebildet ist und insbesondere eine Mehrzahl entlang der Trajektorie angeordnete Magnetspulen aufweist.

10. Verpackungseinrichtung nach einem der vorangehenden Ansprüche,
**dadurch gekennzeichnet,**
- **dass** die Transportschiene (2, 2a, 2b) zumindest einen Schenkel entlang einer Transportvorrichtung aufweist, insbesondere dass die Transportvorrichtung einen geschlossenen Ring mit zumindest einem Schenkel in der Form der Transportschiene (2, 2a, 2b) bildet.

11. Verpackungseinrichtung nach einem der vorangehenden Ansprüche,
**dadurch gekennzeichnet,**
- **dass** die Transportschlitten (4, 4a, 4b) auf der Transportschiene (2, 2a, 2b) rollend gelagert sind und durch eine magnetische Kopplung an der Transportschiene (2, 2a, 2b) gehalten sind.

12. Verpackungseinrichtung nach einem der vorangehenden Ansprüche,
**dadurch gekennzeichnet,**
- **dass** der Produktivbereich eine Abfülleinrichtung, insbesondere eine sterile Abfülleinrichtung ist.

13. Verpackungseinrichtung nach Anspruch 12,
**dadurch gekennzeichnet,**
- **dass** die Transportschiene (2, 2a, 2b) im Füllbereich außerhalb der Abfülleinrichtung geführt wird, wobei eine Wand der Abfülleinrichtung den Transportschlitten (4, 4a, 4b) umlaufend umschließt.

14. Verpackungseinrichtung nach einem der vorangehenden Ansprüche 12 oder 13,
**dadurch gekennzeichnet,**
- **dass** die Abfülleinrichtung den Transportschlitten (4, 4a, 4b) radial umlaufend umschließt, insbesondere dass die Abfülleinrichtung ein Gehäuse (16) um den Transportschlitten (4, 4a, 4b) bildet.

15. Verfahren zum Betreiben einer Verpackungseinrichtung gemäß einem der Ansprüche 1 bis 14, insbesondere Füllmaschine bei dem
- zumindest ein Transportschlitten (4, 4a, 4b) wenigstens entlang eines Produktivbereichs der Verpackungseinrichtung auf einem Transportschienenschenkel (2') der Transportschiene (2, 2a, 2b) bewegt wird,
- der Transportschlitten (4, 4a, 4b) wenigsten entlang eines von dem Produktivbereichs verschiedenen Bereichs der Verpackungseinrichtung auf einem Transportmittelschenkel (8') der Transportmittel (8) bewegt wird, wobei
- die Transportschlitten (4, 4a, 4b) entlang des Transportschienenschenkels (2') und des Transportmittelschenkels (8`) im Wesentlichen entlang einer linearen Achse bewegt werden,
**dadurch gekennzeichnet,**
- **dass** ein Permanentmagnet (6, 6a, 6b) des Transportschlittens zunächst mit dem Transportmittel (8) gekoppelt wird und anschließend von dem Transportmittel (8) getrennt wird und mit der Transportschiene (2, 2a, 2b) gekoppelt wird.

## Claims

1. Packaging device, in particular filling device, with
- at least one transport rail (2, 2a, 2b),
- at least one transport means (8) different from the transport rail (2, 2a, 2b),
- at least one transport carriage arranged on the transport rail (2, 2a, 2b) and coupled to the transport rail (2, 2a, 2b) by means of an electric motor, wherein
- a transport rail leg (2') of the transport rail moves the transport carriage at least along a productive area of the packaging device,
- a transport means leg (8') of the transport means (8) moves the transport carriage at least along an area of the packaging device different from the productive area, wherein
- the longitudinal axes of the transport rail leg (2') and the transport means leg (8') are substantially parallel to each other and the transport carriages along the transport rail leg (2') and the transport means leg (8') have the same direction of movement,
**characterized in**
- **that** the transport carriage has at least one permanent magnet (6, 6a, 6b),
wherein the at least one permanent magnet (6, 6a, 6b) can be coupled both to the transport rail (2, 2a, 2b) and to the transport means (8).

2. Packaging device according to claim 1,
**characterized in**
- **that** the transport means (8) have a chain drive, toothed belt drive or belt drive.

3. Packaging device according to any of the preceding claims,
**characterized in**
- **that** the transport means (8) have magnetic coupling members which can be magnetically coupled to the transport carriages.

4. Packaging device according to any of the preceding claims,
**characterized in**
- **that** the transport carriages are held to the transport means (8) by magnetic coupling.

5. Packaging device according to any of the preceding claims,
**characterized in**
- **in that** the transport means (8) have receptacles which are formed for receiving the transport carriages, in particular **in that** the receptacles are arranged as a recess in the region of the magnetic coupling members.

6. Packaging device according to any of the preceding claims,
**characterized in**
- **that** the transport means leg (8') and the transport rail leg (2') run essentially horizontally.

7. Packaging device according to any of the preceding claims,
**characterized in**
- **that** a first one of the transport means (8) is arranged before an insertion (20a) into a productive area, in that the transport rail (2, 2a, 2b) is arranged in the productive area, and in that a second one of the transport means (8) is arranged after an ejection from the productive area.

8. Packaging device according to any of the preceding claims,
**characterized in**
- **that** a carrier (10) for at least one package (22) is arranged on the transport carriage, in particular
- **that** the carrier (10) is detachably arranged on the transport carriage.

9. Packaging device according to any of the preceding claims,
**characterized in**
- **that** the transport rail (2, 2a, 2b) and the transport carriages are formed as linear motors, and/or
- **that** the transport rail (2, 2a, 2b) is formed by a stator of the linear motor and in particular has a plurality of magnetic coils arranged along the trajectory.

10. Packaging device according to any of the preceding claims,
**characterized in**
- **that** the transport rail (2, 2a, 2b) has at least one leg along a transport device, in particular that the transport device forms a closed ring with at least one leg in the shape of the transport rail (2, 2a, 2b).

11. Packaging device according to any of the preceding claims,
**characterized in**
- **that** the transport carriages (4, 4a, 4b) are mounted rolling on the transport rail (2, 2a, 2b) and are held on the transport rail (2, 2a, 2b) by a magnetic coupling.

12. Packaging device according to any of the preceding claims,
**characterized in**
- **that** the productive area is a filling device, in particular a sterile filling device.

13. Packaging device according to claim 12,
**characterized in**
- **that** the transport rail (2, 2a, 2b) is guided in the filling area outside the filling device, a wall of the filling device circumferentially enclosing the transport carriage (4, 4a, 4b).

14. Packaging device according to any one of the preceding claims 12 or 13,
**characterized in**
- **that** the filling device radially surrounds the transport carriage (4, 4a, 4b), in particular that the filling device forms a housing (16) around the transport carriage (4, 4a, 4b).

15. Method for operating a packaging device according to any one of claims 1 to 14, in particular a filling machine in which
- at least one transport carriage (4, 4a, 4b) is moved at least along a productive area of the packaging device on a transport rail leg (2') of the transport rail (2, 2a, 2b),
- the transport carriage (4, 4a, 4b) is moved at least along an area of the packaging device other than the productive area on a transport means leg (8') of the transport means (8), wherein
- the transport carriages (4, 4a, 4b) are moved along the transport rail leg (2') and the transport center leg (8') essentially along a linear axis,
**characterized in**
- **that** a permanent magnet (6, 6a, 6b) of the transport carriage is first coupled to the transport means (8) and then separated from the transport means (8) and coupled to the transport rail (2, 2a, 2b).

## Revendications

1. Dispositif d'emballage, en particulier dispositif de remplissage, avec
- au moins un rail de transport (2, 2a, 2b),
- au moins un moyen de transport (8) différent du rail de transport (2, 2a, 2b),
- au moins un chariot de transport disposé au rail de transport (2, 2a, 2b) et couplé avec le rail de transport (2, 2a, 2b) par un moteur électrique, **où**
- une branche (2') de rail de transport du rail de transport déplace le chariot de transport au moins le long d'une zone productive du dispositif d'emballage,
- une branche de moyen de transport (8') du moyen de transport (8) déplace le chariot de transport au moins le long d'une zone du dispositif d'emballage différente de la zone productive, où
- les axes longitudinaux de la branche de rail de transport (2') et de la branche de moyen de transport (8') sont essentiellement parallèles entre eux et les chariots de transport ont une même direction de déplacement le long de la branche de rail de transport (2') et de la branche de moyen de transport (8'),
**caractérisé en ce**
- **que** le chariot de transport a au moins un aimant permanent (6, 6a, 6b), où le au moins un aimant permanent (6, 6a, 6b) est couplable au rail de transport (2, 2a, 2b) et au moyen de transport (8).

2. Dispositif d'emballage selon la revendication 1,
**caractérisé en ce**
- **que** les moyens de transport (8) comprennent un entraînement par chaîne, un entraînement par courroie crantée ou un entraînement par bande.

3. Dispositif d'emballage selon l'une des revendications précédentes,
**caractérisé en ce**
- **que** les moyens de transport (8) comprennent des éléments de couplage magnétiques qui sont couplables magnétiquement avec les chariots de transport.

4. Dispositif d'emballage selon l'une des revendications précédentes,
**caractérisé en ce**
- **que** les chariots de transport sont maintenus sur les moyens de transport (8) par couplage magnétique.

5. Dispositif d'emballage selon l'une des revendications précédentes,
**caractérisé en ce**
- **que** les moyens de transport (8) comprennent des logements qui sont formés pour recevoir les chariots de transport, en particulier que les logements sont disposés comme un retrait dans la zone des éléments de couplage magnétiques.

6. Dispositif d'emballage selon l'une des revendications précédentes,
**caractérisé en ce**
- **que** la branche de moyen de transport (8') et la branche de rail de transport (2') s'étendent essentiellement horizontalement.

7. Dispositif d'emballage selon l'une des revendications précédentes,
**caractérisé en ce**
- **qu'**un premier des moyens de transport (8) est disposé devant une entrée (20a) dans une zone productive, que le rail de transport (2, 2a, 2b) est disposé dans la zone productive et qu'un deuxième des moyens de transport (8) est disposé derrière une sortie de la zone productive.

8. Dispositif d'emballage selon l'une des revendications précédentes,
**caractérisé en ce**
- **qu'**un support (10) pour au moins un emballage (22) est disposé sur le chariot de transport, en particulier
- **que** le support (10) est disposé de manière amovible sur le chariot de transport.

9. Dispositif d'emballage selon l'une des revendications précédentes,
**caractérisé en ce**
- **que** le rail de transport (2, 2a, 2b) et les chariots de transport sont formés comme moteur linéaire, et/ou
- **que** le rail de transport (2, 2a, 2b) est formé d'un stator du moteur linéaire et comprend en particulier une pluralité de bobines magnétiques disposées le long de la trajectoire.

10. Dispositif d'emballage selon l'une des revendications précédentes,
**caractérisé en ce**
- **que** le rail de transport (2, 2a, 2b) comprend au moins une branche le long d'un dispositif de transport, en particulier que le dispositif de transport forme un anneau fermé avec au moins une branche de la forme du rail de transport (2, 2a, 2b).

11. Dispositif d'emballage selon l'une des revendications précédentes,
**caractérisé en ce**
- **que** les chariots de transport (4, 4a, 4b) sont montés de manière roulante sur le rail de transport (2, 2a, 2b) et sont maintenus sur le rail de transport (2, 2a, 2b) par un couplage magnétique.

12. Dispositif d'emballage selon l'une des revendications précédentes,
**caractérisé en ce**
- **que** la zone productive est un dispositif de remplissage, en particulier un dispositif de remplissage stérile.

13. Dispositif d'emballage revendication 12,
**caractérisé en ce**
- **que** dans la zone de remplissage, le rail de transport (2, 2a, 2b) est guidé à l'extérieur du dispositif de remplissage, où une paroi du dispositif de remplissage entoure le chariot de transport (4, 4a, 4b) sur tout le pourtour.

14. Dispositif d'emballage selon l'une des revendications 12 ou 13 précédentes,
**caractérisé en ce**
- **que** le dispositif de remplissage entoure le chariot de transport (4, 4a, 4b) radialement sur tout le pourtour, en particulier que le dispositif de remplissage forme un boîtier (16) autour du chariot de transport (4, 4a, 4b).

15. Procédé pour exploiter un dispositif d'emballage selon l'une des revendications 1 à 14, en particulier une machine de remplissage où
- au moins un chariot de transport (4, 4a, 4b) est déplacé au moins le long d'une zone productive du dispositif d'emballage sur une branche de rail de transport (2') du rail de transport (2, 2a, 2b),
- le chariot de transport (4, 4a, 4b) est déplacé au moins le long d'une zone du dispositif d'emballage différente de la zone productive sur une branche de moyen de transport (8') des moyens de transport (8), où
- les chariots de transport (4, 4a, 4b) sont déplacés le long de la branche de rail de transport (2') et de la branche de moyen de transport (8') essentiellement le long d'un axe linéaire,
**caractérisé en ce**
- **qu'**un aimant permanent (6, 6a, 6b) du chariot de transport est au début couplé au moyen de transport (8) et est ensuite séparé du moyen de transport (8) et couplé au rail de transport (2, 2a, 2b).
